# EUROPEAN PATENT SPECIFICATION

(11) **EP 0 780 041 B1**
(45) Date of publication and mention of the grant of the patent: **14.09.2005**
(21) Application number: 95931484.0
(22) Date of filing: 04.09.1995
(51) Int. Cl.: H04L 12/46, H04L 12/66

(54) **DEVICE AT ATM-NETWORK**
VORRICHTUNG AN EINEM ATM-NETZ
DISPOSITIF POUR RESEAU A MODE DE TRANSFERT ASYNCHRONE

(30) Priority: 08.09.1994 SE 9402986
(43) Date of publication of application: 25.06.1997
(73) Proprietor: TELIA AB, 126 80 Farsta (SE)
(72) Inventor: LARAQUI, Kim, S-117 36 Stockholm (SE); KAVAK, Nail, S-143 32 Varby (SE)
(74) Representative: Karlsson, Leif Karl Gunnar
(86) International application number: PCT/SE1995/000989
(87) International publication number: WO 1996/008099

(56) References cited:
- EP-A- 0 473 066
- EP-A- 0 524 316
- WO-A-93/26107
- US-A- 5 280 481

## Description

### FIELD OF TECHNOLOGY

The present invention relates to the technical field which is indicated in the introduction to the following patent claim 1.

### PRIOR ART

In the European patent application 526 106 is shown an integrated wireless telecommunications system and local area network. At that a system which combines the possibilities of a LAN and a telecommunication network is shown. The system implies that a LAN (Local Area Network) can be connected to an ISDN (Integrated Services Digital Network). A cell controlling unit converts the LAN-protocol to the ISDN-protocol and vice versa.

By EP 331 190 is indicated a method for controlling address parameters at connection of LAN and ISDN. The document describes among other things a method for allocating endpoint identifiers to terminals in the network which can be addressed by an interface-unit.

WO 94/7316 describes an ATM-LAN. The system consists of an ATM-network (Asynchronous Transfer Mode) which has a number of ports with unique addresses. The system offers address resolution for deciding which port address that is of immediate interest. The system manages MAC-addressing for interaction of local area networks with larger area networks.

EP 479 096 shows a bridge for connection of a LAN to an ATM network. The bridge consists of two parts, one of which supports functions for layer 2.1 for communication in ATM, and the other part manages communication from LAN for allowing communication between the networks.

The American patent document 5 280 481 refers to a method and a device for making it possible to use for instance MAC (Media Access Control)-protocol for communication with an ISDN-network. This is made by the ISDN-network emulating a LAN by converting it by means of what has been indicated.

EP-A-524 316 discloses LAN emulation by an ATM system.

### DESCRIPTION OF THE INVENTION

### TECHNICAL PROBLEM

There is a desire that one in a far-reaching way can realize systems which deals with both public and private data communication services over ATM. The systems also have the demands upon them that they must require very small resources. The invention among other things has the aim to solve this problem.

Previous solutions have among other things been dependent on that LAN-traffic is first analysed at certain nodes in the ATM-network. This analysis is time-consuming as far as it results in an address resolution, the result of which must be sent back to the customers, at which these themselves establish channels to addressees. The known devices consequently have only worked as a catalogue for address resolution. An overall wiev on this matter has consequently been lacking. The invention also solves this problem.

The products referred to which use the invention shall be possible to include in conventional tele- and datacommunication equipment/exchanges which are installed for managing of data communication services over ATM. At that there exist demands that the management of datacommunications services in for instance broad band networks shall be possible to make easier for customers and other operators than what is the case with so far suggested solutions. The invention solves among other things this problem.

The sizes of the codes which are used in connection with the above mentioned shall have the possibility of being comparatively small. The invention also solves this problem.

### THE SOLUTION

What in the main can be regarded as significant for the invention will be obvious from the following patent claims.

### ADVANTAGES

By what is suggested in the patent claims one can in an efficient way achieve that the private side of the LAN-emulation becomes independent of the public one, which makes possible that the with the invention associated solutions are easier to use in the private LAN-world. The private side can in addition undertake bigger responsibility for the management of burst-like LAN-traffic. The new solution can work with "blind" function more than what has so far been possible. The new solutions become much cheaper and more easy to implement compared with before.

In accordance with the invention the nodes which receives the LAN-traffic can act both as relays and address resolvers. The adress resolution constitutes a side effect of the operation and function of the relays. By these distinctive features the new systems can rapidly bring forward or finish the LAN-traffic through the network at the same time as the customers can become aware of how they can chose alternative signalled paths over the ATM-network for future traffic.

### DESCRIPTION OF FIGURES

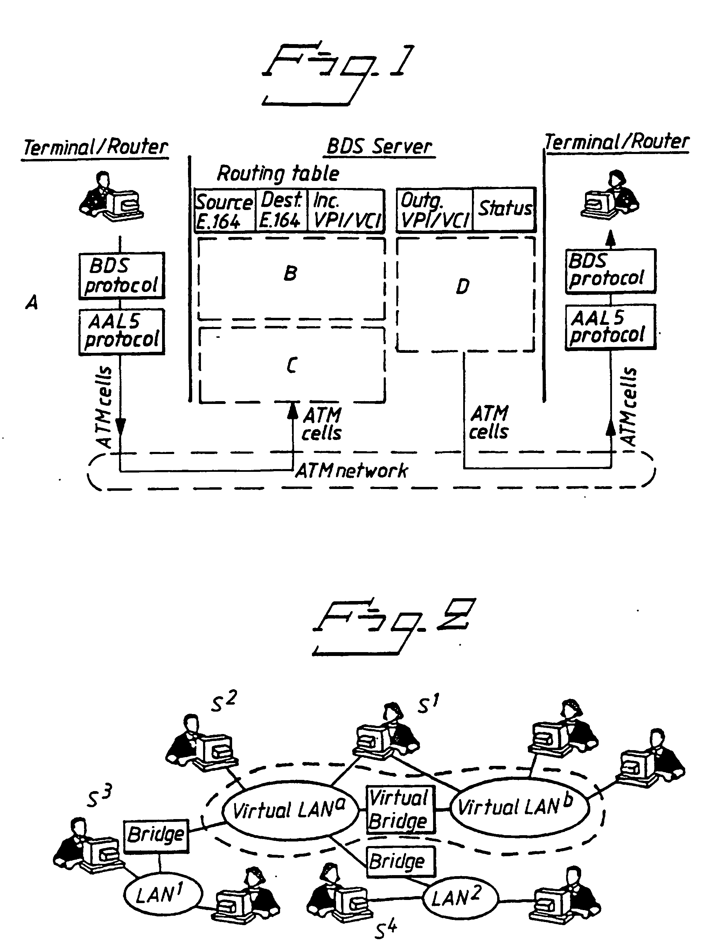

One at present suggested embodiment of a device which shows the for the invention significant characteristics will be described below, while at the same time is referred to enclosed drawings where
Figure 1 in the form of a circuit diagram shows a BDS-server,
Figure 1 in the form of a circuit diagram shows a BDS-server,
   - Check if VCl to addressed E.164 is already available (VPI="BDS"). If not, use a new VCI.
      - BOM: - Validate E.164 address.
      - Register E.164 address.
      - Establish new path
         (outg. VPI/VCI).
      - Transmit cell.
      - COM: - Check VCI.
      - Consult table.
      - Use resulting VPI/VCI.
      - Transmit cell.
      - EOM: - Check inc. VPI
      - Consult table.
      - Refind outg. VPI/VCI. If next node is a terminal/router, then VPI="BDS".
      - Transmit cell.
      - Cach. or remove inc./outg. VPI/VCI.
Figure 3 in the form of a block diagram shows relations between BDS- and LAN-address contexts,
Figure 4 in the form of a diagram shows BDS-and LAN-related protocols and PDU (BOM),
Figure 5 in the form of a circuit diagram shows a physical topology for a BDS-network,
Figure 6 in the form of a Table shows the FBDS-PDU,
   ToS bit 8-6 = Routing level.
   ToS bit 3 = Rapid configuration (priority).
   ToS bit 2 = Antimessage.
   ToS bit 1 = Acknowledgement.

   QoS bit 8-6 = Flag for options.
   QoS bit 5 = "Establish SVC now!".
   QoS bit 4 = Unknown alias.
   QoS bit 3 = "Inform me about address resolutions".
   QoS bit 2 = "Subscribe to config. infor within a group".

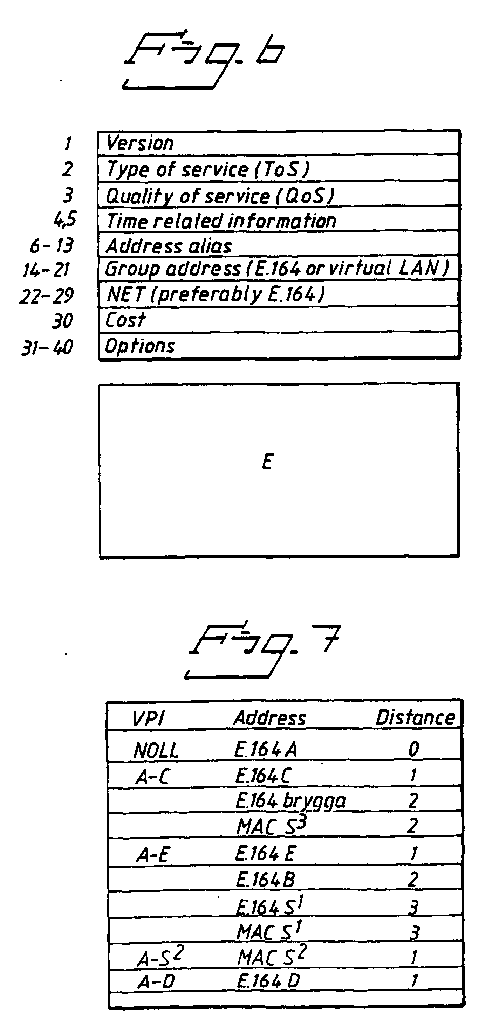

Figure 7 shows a routing table as it might look for server A in Figure 5.

### DETAILED EMBODIMENT

Here is specified and implemented a simple and robust mechanism for configuration management of a public broad band service for data communication over ATM. The configuration management further relates LAN- to E.164-addresses, at which virtual LANs over a public network can be implemented.

It is known to implement a broad band service over ATM (BDS, Broad band Data Service). A natural continuation of the specification and implementation work with BDS was to relate a known public E.164-based service to activities which concern ATM-networks.

The difficulty with such a service over a public BDS-network is the establishing and management of the relation between address spaces. In LAN, IEEE MAC addresses are used, while one in BDS speaks about E.164-addresses.

In connection with ATM the concept LAN-emulation relates to methods for creation of virtual LANs over B-ISDN. On these virtual LANs then LAN-stations can be connected to each other in one in relation to the topology of the underlying public network transparent way. This implies a very dynamic connection between addressable LAN-nodes and ATM-nodes, because the former in principle, as one likes in time and space, shall be possible to project on the latter.

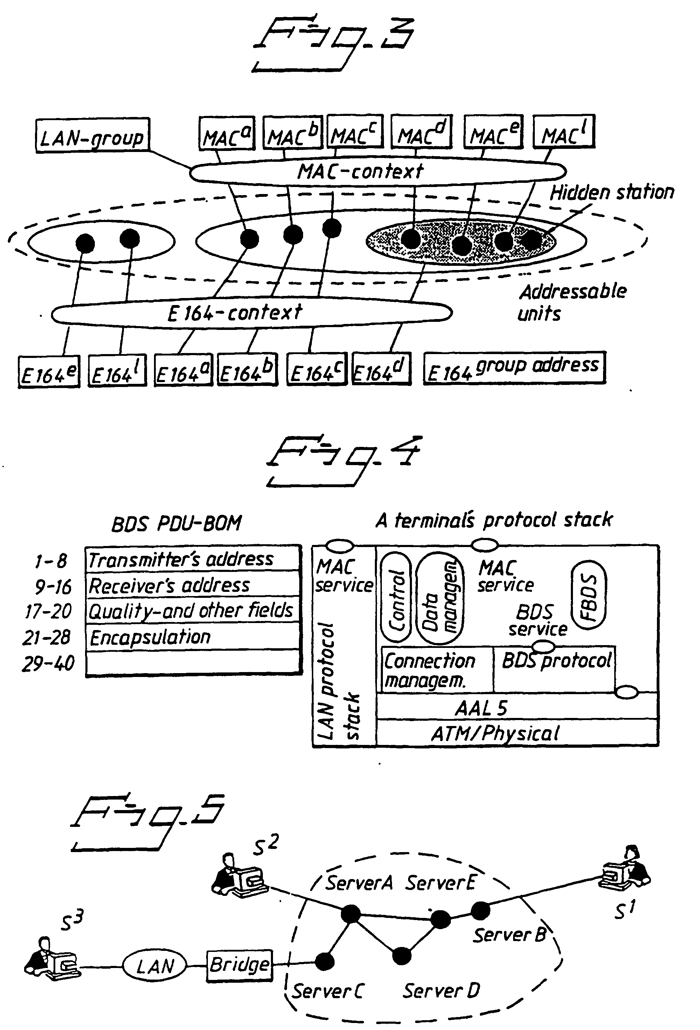

The service in which the LAN-emulation is to result must correspond with traditional LAN interfaces which are offered, i.e. MAC_UNITDATA. request and MAC_UNITDATA.indication. Furthermore, it must be possible to use in the following types of associations (where the term "station" relates to traditional LAN-stations or bridges, while "terminal" relates to stations and bridges with ATM-interface): Station to station over a virtual LAN or bridge (for instance S³ to S⁴ in Figure 2); station to terminal over a virtual or real bridge (for instance S² to S³); Terminal to terminal possibly over a virtual bridge (for instance S¹ to S²). From user point of wiev the LAN emulation service must respect syntax and semantics of MAC-services and therefore be able to manage existent LAN-applications.

At the design of a virtual LAN over ATM consideration must be taken to further design principles, beside those in the previous paragraph, which are associated to the emulator's internal operations. In the first place AAL5 should be used as underlying technology becuse this will dominate the market. Further the LAN-emulation should be specified so that it respects a fundamental quality in ATM-networks, namely integrity in the deliverance order of packets between two to each other directly connected nodes. This quality moreover is also to be found in most LAN technolgies to-day, for instance Ethernet. The LAN emulation also must be able to manage both group and individual addresses and must not presume that packets which are addressed to a specific node always can be broadcasted to a group of nodes. Finally the virtual LAN shall allow that a station can be registered in a number of virtual LANs at the same time.

In a MAC-context, units in Figure 3 correspond to bridges and LAN-stations (for instance work stations). In a BDS-context they correspond to (BDS) servers and (BDS) terminals. A LAN-station or bridge which is equipped with an ATM-interface also can act as BDS-terminal, provided it has the ability to manage the E.164 SNPA (Subnetwork Points of Attachment). Such LAN-stations or bridges are therefore interesting to study from both addressing contexts.

The relation between LAN and BDS can be shown according to Figure 3, where address structuring concept from ANSA is used. Units are identified via MAC-addresses, E164-addresses, or both. In the last mentioned case therefore one type of addresses can be regarded as alias to the other. In Figure 3 we also allow MAC/E.164 contexts to represent logical or physical groups of units, for instance a physical or virtual LAN.

A LAN emulation group (LEG) defines a MAC address context. It is not apparent from Figure 3, but is implied that a MAC-address can belong to a number of different MAC-address contexts, i.e. a number of different LEGs. For terminals there can further exist a number of MAC-alias to one and the same E.164.

For instance a terminal which represents a LAN-bridge can be reflected in a number of entities in a MAC-context, though it has only one E.164-address (for instance MAC^{d},MAC^{e} and MAC^{f} on E.164^{d}). This relation is depending on the extent to which the bridge allows MAC-addresses on its MAC/LAN-side, for instance Ethernet, to become "known" to the E.164-side.

Some of the units which are identified in the E.164 context are not "visible" from any MAC-context (for instance E.164^{e} and E.164^{f}). These units can for instance be BDS-terminals or servers which do not participate in a virtual LAN.

In the present method the tuppel <MAC,LEG> is regarded as alias to an E.164-address. An E.164-address can have more than one alias, but alias can only be related to a specific E.164-address (to a BDS-server or BDS-terminal). This means that a LAN-unit can register itself towards a number of BDS-servers, but that it must not register the same <MAC, LEG>-tuppel on different servers. In other case the communication risks becoming inconsistent, because then integrity in the sequence order of the packets can not be guaranteed.

In the original BDS the routing was based on an ideal abstraction which settled that all servers had a direct VP to all others (full mesh). Routing was decided by the value of the tuppel <E.164-address transmitter, E.164-address receiver>. For more general topologies a "shortes-path" algorithm has been used, which can be derived from an algorithm-class developed by L.R. Ford and D.R. Fulkerson and which easily can be used as a base for decentralized routing. It is a distance vector algorithm in which each node in the network contains a data base which describes the distance to every other node.

Roughly, minimalistic algorithm distance tables are combined with routing tables, something which is fairly easy to do because in each moment only one path is maintained between each pair of nodes.

Another algorithm, which also results in the establishment of shortest paths between nodes in a network, is that which was first specified by W.

Dijkstra, in which the routing table of the nodes builds up a global topological knowledge with information about the distance to each node and the cost of each link. With W.Dijkstras algorithm are, however, bigger databases required in each node, especially if it shall be decentralized. It is, however, more advantageous than the simpler variant which was chosen to implement because it makes possible both a better distribution of the traffic in the network (in this case the data communication traffic) and routing.

The routing strategy which is used is decentralised and statistic. With statistic is meant that it establishes new paths only as a consequence of topological changes in the network. It consequently does not react on momentary stoppage in the network. To solve this, methods were introduced to use alternative paths between pairs of nodes and unconventional mechanisms to take care of stoppage.

An important object with the method has been to specify routing in the BDS-network in such a way that LAN-stations and bridges can operate as independently as possible from the network. Such an aim may seem strange, especially if it is suggested by a network operator, but the object is in fact to advocate a federation which from LAN-point of view puts the public one on a par with the private. By this a method can be presented which impose LAN-administrations a big responsibility in the managing of the behaviour of these sources.

In the routing method, consequently, the original routing tables in the BDS-servers are used with certain small adjustments for the management of alias addresses according to the above. This implies that BDS-units (terminals and servers) can chose path on the basis of both E.164- and MAC-addresses.

Here the use of the PVC (Permanent virtual Circuits) and the SVC (Switched Virtual Circuits) for data services over ATM are combined. The details for the SVC is however left outside the specification. A LAN-station or bridge can transmit packets through the BDS-network or use the SVC direct to the receiver. For instance can S¹ and S² (Fig.5) communicate either via the virtual LAN (i.e. through the BDS-network) or establish a direct channel between them. The possibility to use SVEs can be used on the BDS-network for reducing the load of a certain source on the network. A terminal which establishes an SVC directly to another must however, in spite of this, still listen to messages from the BDS-network, among other things for getting information about the status of other LAN-stations belonging to the same virtual LAN.

If the LAN-traffic takes place over the BDS-network, on basis of MAC-addresses, the network will at each address solution inform the traffic source about which E.164-address corresponds to this MAC-address. Notice, however, that the BDS-network, by the registration of alias-addresses, certainly can choose path by only looking at the MAC-address. Example (Fig.5): If S¹ addresses S² by a MAC-address, the virtual LAN will inform S¹ about S²:s E.164-address, provided that S¹ has subscribed to such information from the BDS-network. S¹ can after that decide whether an SVC to S² shall be established or not. In certain cases the BDS-network (the virtual LAN) moreover can itself demand that such a direct connection shall be established, for instance as a way to escape a turbulence in the network. To sum up, the BDS-server acts as E.164- and MAC- "router" or bridge, as an SVC address server and as primitive traffic control.

BDS must accordingly be revised so it can manage MAC-addresses in the first ATM-cell. To make this possible, a coding for E.164 which the standards have not reserved is used. The specific pattern for the first 4 bits in this E.164-address is not important for what is described below. It is therefore referred to as MAC_BDS. The BDS-terminal registers its own address together with its MAC-address (or more MAC-addresses because a BDS-terminal can operate as LAN-bridge). For each MAC-address the terminal further expects to specify which LAN (LAN Emulation Group, i.e. virtual LAN) this MAC-address shall belong to. For instance S¹ (Fig. 2) can register the same MAC-address in two groups, a and b. If the registration is accepted it results in a confirmation from the BDS-network. Terminals are further expected to continuously transmit System Hellos to the BDS-network.

Here are specified two address coding methods in connection with the address family MAC_BDS. For registration of individual MAC-addresses the remaining bits in the first octet of the E.164-address is equal to zero. An alternative is when the bit pattern represents a TROYAN MAC-address (as for MAC_BDS, the specific appearance of this bit pattern is not relevant for the discussions in this document).

For instance, a BDS-terminal configured to a bridge would possibly be aware of that the Ethernet-side of the bridge includes hidden stations. In this case the bridge can register its own MAC-address as MAC_BDS+TROYAN as a way of telling the BDS-network that MAC-addresses which are not known in (registered in) the BDS-network shall be transmitted to this terminal/bridge. By this procedure one solves problems with hidden stations in a virtual LAN. This solution however requires one more manipulation of addresses according to the following: The unknown MAC-address (which hopefully belongs to a hidden LAN-station) will be encapsulated in the BOM-PDU och replaced by the MAC-addresses for bridges which have registered themselves as TROYAN.

One in the network unresolved MAC-address is encapsulated only with the addresses of the bridges which are included in the same virtual LAN. When a bridge receives a packet with its own address but with the bit pattern marking TROYAN, it reserves the encapsulation and forwards the packet, for instance through its Ethernet port.

In the present solution it is presumed that address learning is performed pronounced, i.e. not integrated with the communication. Future versions should integrate learning with ordinary traffic, for instance need not System Hello messages be transmitted over a channel through which ordinary, daily traffic is already passing.

We define a Fast Lane as a temporary path through the BDS-network between two servers at the outskirts of the network. The aim with the Fast Lane is to directly connect two LAN-units which generate much traffic between themselves, and in that way unload internal BDS-servers from this traffic. A Fast Lane is therefore analog with the SVC with the difference that the Fast Lane is established within the network, whereas the SVC is established outside.

Another analogy is that the Fast Lane is never registered in the routing tables because it is temporary. The Fast Lane is to a great extent similar to that mechanism which has been suggested for SMDS (short-cut routing). Example: The BDS-servers A and B in Fig. 5 establish a Fast Lane between themselves and by that unload the server E from the traffic between S¹ and S². In the first BDS-solution statistical assumptions were made about connectivity and routing mechanisms between servers and terminals. Further was suggested that one should adjust the ISO-protocols ISO9542 and ISO10589 to ATM and use them for managing of configuration and routing in BDS.

The advantages with the protocols above are that they are standardized and welltried and that they make use of W.Dijkstra's link status algorithm as described above. Further ISO10589 already has a window towards CMIP (Common Managment Information Protocol) and therefore can easily be relaterd to existing management system. As we made clear above, we look at this solution in parallell with that which is described here.

The basis for routing and managing of configurations consists of the VPIs which serve as ports for the distance vector algorithm. This algorithm has been much used in data communication connections. It is very simple but is only suitable for datagram-communication because it can not normally guarantee that the sequence order is kept within the network. This can be made up for by checking the time at which a registered path shall be allowed to have something to do with routing.

In the BDS-network symmetric VPIs between connected pairs of nodes are presumed. Over these VPIs we will find two types of traffic: Data and management. The data traffic is performed by means of BDS, whereas the management traffic can be compared with F-flows which have been defined for ATM. This is called management for BDS to FBDS.

FBDS-entities in BDS-servers, the PDU-structures of which are shown in Fig. 6, thus interact directly with AAL5. Time related octets serve for exchanging information about frequency and what is of immediate interest in the exchange of messages. NET (Network Entity Title) signifies the real name of the unit (the server or the terminal) in the system. In practice an E.164-address is intended, but in principle there is nothing that forbids the use of MAC-addresses as NET.

If that is done, one should however be aware that the NET cannot be used as a basis for signalling. The cost field specifies the distance, in number of jumps, to the station intended by NET. The option field is not used in this version of FBDS.

The establishment of associations between stations (terminals or servers) does not constitute an integrated part of the algorithm. A station should know his own E.164-address (NET) and in the case of terminal also own alias, if any. At the initiation this address information is loaded in the configuration data base on VPI=ZERO (which is a macro referring to the own system).

All elements in the data base which refer to VPI=ZERO are automatically given the cost 0 (zero) and for each is also used a bitmap by which one can keep a check on which other stations that have registered it. To each element in the database which has the cost 0 is further associated a clock which keeps a check on the frequency by which the own information shall be transmitted on other VPIs (i.a. all direct neighbours).

Further resources which must be initiated are buffers for incoming and outgoing data, the maximum number of jumps that the station accepts to register etc. The initiation phase is followed by an operative phase in which a station can start going through the elements in its data base and interplay with its surroundings according to what is now described.

The FBDS-entity checks all the element in its data base, inclusive the own addresses on VPI=ZERO. All elements which are registered in a server or terminal are connected to a VPI which indicates from where the information in the element originates (see Fig. 7). If an element has registered a cost which exceeds a maximally allowed value of accepted number of jumps (according to what is described above) it will be taken away from the table.

Here is allowed registration of invalid elements, i.e. such with in reality too high costs, to get possibility to make up for situations in which stations wrongly inform each other about other stations which actually do not exist on the network. Example (Fig 5): The server C's connection with A becomes invalid for some reason, at which the server A informs the servers E and D about this. Due to the asynchronism in the network this results in that D registers a new path to C via E, and informs A about this, which in its turn informs E about this etc. The wrong information circulates in the network until the costs exceed a maximum value, at which they are taken away and the network is stabilized.

An element in the data base can be registererd as VALID or INVALID. The invalid variant aims at two things. The first is to give direct neighbours sufficient of time to register transmitted configuration information. Example (Fig. 5): The server A selects path for BDS-packets to server C, on B's behalf. A then suddenly loses contact with C and therefore registers all addresses which are associated with VPI=C as INVALID, After that it sees to that this invalidity is registered by B. When the invalidity in C-addresses has been confirmed by B to A, A can remove all C-elements from its own data base.

The second aim with invalid addresses is to give direct neighbours sufficent of time for answering an invalid address with an alternative path. If (Fig. 5) server D loses his connection to E, this will make possible for A to tell D that it can take care of traffic between D and E. By this procedure the configuration management can be made considerably more effective.

Each element in the data base,for which a clock has passed a given maximum value, is taken away from the table. If the same clock reaches a given value less than the maximum, its status is changed to INVALID. This is described in more details below.

Each time a new element is registered in the data base, or an already registered element gets its status changed (VALID or INVALID or vice versa), this new information is sent to all direct neighbours (i.e. on all the BDS-VPIs). However, the information is not sent over that VPI from which the information has been received.

A new registered element which corresponds to a direct unit (for instance E.164 C over VPI=A-C in Figure 7) gets in a corresponding way all information transmitted to itself, via the VPI from which the new element came (i.e. all information in the table (Fig. 7) is transmitted over VPI=A-C, beside that information which has already been registered on A-C). Also notice that an element always must have the same status as that (or those) NET which have been registered over the same VPI (i.e. status for E.164 bridge and MAC S³ must correspond to status for E.164 C, because this element represents NET for VPI A-C).

According to the above all information in the databases are sent to direct neighbours. An exception to this is made if the neighbour is a terminal. In that case one can filter away information which is only concerned with servers and only send information about other terminals which belong to the same LEG. A similar filter can also be used between servers, so a server only distributes information to those which have registered the same LEG as the information. This mechanism must however be used with great carefulness so isolated islands of servers which actually serve the same LEGs are not created.

Incoming PDUs can either be positive or negative, The latter, which we choose to call "antimessages" are used to explicitly deregister elements in a data base. This is explained in detail below.

Positive messages are confirmed immediately, whereupon their contents is analysed. This contents can bring about that a new element is registered in the data base, or that the status of an old element or VPI is changed, or that it does not influence the data base at all. The last mentioned case most frequently occurs as a consequence of the cost for the element being too high.

If the informationen in the FBDS-PDU brings about that a new element is introduced into the data base, this change will be taken care of according to the above, i.e. the new registration is spread to all. If the new element represents a direct neighbour all information is also spread to him.

If the information in the PDU represents an element which has already been registered, two things can happen. If this element points at a cheaper path it will be managed as it were new. If not, it will not bring about any changes in the data base. The data base contains a bit-field by which a server can kep a check on which messages that have been confirmed by other direct servers, i.e. all FBDS information exchange is acknowledged.

If the incoming FBDS-message signifies an antimessage once again more things can occur. One is when for instance server A receives an antimessage from server B about server A (i.e. server B asks her neighbours to remove server A from their data bases). Such a message can be the consequence of B having not received Hello-messages from A for a while and therefore changes status for A from VALID to INVALID. The immediate answer from A will then be to transmit a Hello-FBDS-PDU and after that, say, inform some management system about that the system parameters (clocks) should be modified or that someting else in the BDS-network is wrong.

Another consequence of antimessages is when it is a matter of a direct neighbour. In this case status is changed for all other elements over the same VPI. One more case is when the antimessage refers to an element which the receiver has registered on another VPI. Example (Fig. 5): Server D loses the connection to server E and transmits information about this to its neighbours which in this case is server A. The message is a way for D to inform its surroundings that it no longer manages to take care of traffic to E. A replies to this antimessage by telling D that it knows how to reach E, and D can register this in its data base.

For all elements with cost 1 or 0, clocks are used. If the element is registered on VPI=ZERO, a clock signal (time-out) is interpreted as it is time to send a hello-FBDS-PDU to all other VPIs. If not, and the time-out indicates a given value (time retry) less than timeout, the status in the element is changed to INVALID. If the clock is not restored before it reaches time-out, the element will be removed from the table.

FBDS was implemented in C on the same platforms as were used for BDS. The implementation is built on the use of asynchronous interfaces by which an FBDS-process methodically scans its own data base and informs its surroundings about changes, if any. When a message is coming in from some other FBDS-process on some other server/terminal, the surveillance of the own data base is interrupted for taking care of this message, whereupon the surveillance is resumed.

Many FBDS-processes can be performed on the same work station. Tests comprising 9 servers and 8 terminals have been performed and all changes of configuration are well managed by the FBDS-processes. Notice that the same FBDS-code is used for both terminal and server. The only difference is found in the management of information distribution, because terminals only get information about other terminals which belong to the same LEG, whereas servers receive all information about the condition of the network.

There are quite a few criteria from which routing algorithms can be analysed, even if one shall be aware of that analysis results are strongly depending on the specific configuration one has chosen to study:
* The speed by which the data bases in the network registers a configuration change.
* The number of control packets needed to achieve a stabilization of the network during and after a change of configuration.
* The size of the control packets.
* The complexity of the control processes.
* Buffer space needed for control.
etc.

The above indicates: the size of the control packets (FBDS-PDU) which is hold in an ATM-cell (AAL5 SAR PDU), small need for buffers and simple control processes.

However, loops can arise in the BDS-network before it gets time to stabilize around a given topology. This is one of the reasons for ARPA being abandoned the algorithm (even if it still should be pointed out that their method was built on costs in the form of bandwidth and not in the form of jumps as in our case). This can however be counteracted by keeping a comparatively stable topology between the servers. Stability can, on the other hand, be one further argument for the link-status algorithm. Stability for the distance vector algorithm can however be obtained by working out a somewhat restricted policy regarding the allocation of LAN-groups to servers, and by that also LAN-stations to LAN-groups.

The basic algorithm, especially when the costs are in the form of number of jumps, requires an information exchange of the size O(n3), where n represents the number of servers in the network (and to some extent also terminals, but these are to tell the truth close associated with certain servers in the border areas of the BDS-network). This big information exchange depends in the first place on the basic blindness of the algorithm which brings about that all messages are transmitted to all neighbours. It can however be improved by making it more intelligent. By our improvements one will go down to an information exchange of O(n²). The algorithm also feels at best of a small diameter of the network, i.e. the connectivity should be high.

## Claims

1. A system for managing data communication services over an ATM network, the system comprising LAN nodes and ATM nodes, and server devices arranged to take care of connectionless data communication traffic, to attend to that respective from this traffic arising data packets reach their destinations, to deal with public data communication and to deal with private data communication arising from a LAN by means of a LAN emulation function, which LAN emulation function is arranged to creates virtual LANs over B-ISDN by dynamic connection between addressable LAN nodes and ATM nodes such that virtual LAN stations are connected to each other in a , in relation to an underlying public network's topology, transparent way, **characterized in that** said ATM nodes are arranged to receive LAN traffic both as relays and address resolvers and to route LAN traffic based on a distance-vector-algorithm, wherein each ATM node contains a distance table, which describes the distance to every other node, and is arranged to combine said distance table and a routing table, and said ATM nodes are arranged to establish alternative paths between pairs of nodes for elimination of momentary stoppage in the networks.

2. A system for managing data communication services over an ATM network according to claim 1, **characterized by** means for relating LAN addresses to E.164 addresses.

3. A system for managing data communication services over an ATM network according to any of the previous claims, **characterized in that** the LAN emulation function is arranged to emulate the syntax and semantics of the MAC services of a LAN interface.

4. A system for managing data communication services over an ATM network according to any of the previous claims, **characterized in that** the LAN emulation function is arranged to maintain the order of delivery of packets between two directly connected ATM nodes, to manage group and individual addresses by assuming that packets which are addressed to a specific LAN node cannot always be transmitted to a group of LAN nodes and to allow that a station is registered in a number of virtual LANs at the same time.

## Patentansprüche

1. System zum Verwalten von Datenkommunikationsdiensten über ein ATM-Netzwerk, wobei das System LAN-Knoten und ATM-Knoten aufweist und Servervorrichtungen, die ausgebildet sind, um verbindungslosen Datenkommunikationsverkehr durchzuführen, um dafür zu sorgen, dass jeweilige in diesem Verkehr auftretende Datenpakete ihre Ziele erreichen, um sich mit öffentlicher Datenkommunikation und mit privater Datenkommunikation zu befassen, die von einem LAN auftreten, mittels einer LAN-Emulationsfunktion, wobei die LAN-Emulationsfunktion ausgebildet ist, um virtuelle LANs über B-ISDN durch dynamische Verbindung zwischen adressierbaren LAN-Knoten und ATM-Knoten derart zu erzeugen, dass virtuelle LAN-Stationen miteinander in einer in Bezug auf eine unterliegende öffentliche Netzwerktopologie transparenten Weise verbunden werden, **dadurch gekennzeichnet, dass** die ATM-Knoten angeordnet sind, um LAN-Verkehr sowohl als Relais als auch Adressresolver zu empfangen und LAN-Verkehr basierend auf einem Distanz-Vektoralgorithmus zu routen, wobei jeder ATM-Knoten eine Distanztabelle enthält, die die Distanz zu jedem anderen Knoten beschreibt, und ausgebildet ist, die Distanztabelle und eine Routing-Tabelle zu kombinieren und wobei die ATM-Knoten ausgebildet sind, um alternative Wege zwischen Knotenpaaren zur Beseitigung eines momentanen Staus in den Netzwerken zu errichten.

2. System zum Verwalten von Datenkommunikationsdiensten über ein ATM-Netzwerk nach Anspruch 1, **gekennzeichnet durch** Mitteln, um LAN-Adressen aufE.164-Adressen zu beziehen.

3. System zum Verwalten von Datenkommunikationsdiensten über ein ATM-Netzwerk nach einem der vorstehenden Ansprüche, **dadurch gekennzeichnet, dass** die LAN-Emulationsfunktion ausgebildet ist, die Syntax und Semantik der MAC-Dienste einer LAN-Schnittstelle zu emulieren.

4. System zum Verwalten von Datenkommunikationsdiensten über ein ATM-Netzwerk nach einem der vorstehenden Ansprüche, **dadurch gekennzeichnet, dass** die LAN-Emulationsfunktion ausgebildet ist, um die Reihenfolge der Lieferung von Pakten zwischen zwei direkt verbundenen ATM-Knoten aufrecht zu erhalten, um Gruppen- und Individualadressen zu verwalten durch die Annahme, dass Pakete, die an einen bestimmten LAN-Knoten adressiert sind, nicht immer an eine Gruppe von LAN-Knoten übertragen werden können, und zum Erlauben, dass eine Station in einer Anzahl von virtuellen LANs gleichzeitig registriert ist.

## Revendications

1. Système de gestion de services de transmission de données sur un réseau MTA, le système comprenant des noeuds RLE et des noeuds MTA et des dispositifs de serveur disposés de manière à s'occuper du flot de données sans connexion, de manière à s'assurer que les paquets de données respectifs produits par ce flot de transmission de données atteignent leur destination, de manière à s'occuper de la transmission de données publiques et de manière à s'occuper de la transmission de données privées provenant d'un RLE au moyen d'une fonction d'émulation du RLE, ladite fonction d'émulation du RLE est disposée de manière à créer des RLE virtuels sur un RNIS-B via une connexion dynamique entre des noeuds RLE et des noeuds MTA adressables de sorte que des stations RLE virtuelles soient connectées les unes aux autres, par rapport à une topologie du réseau publique sous-jacent, de manière transparente, **caractérisé en ce que** lesdits noeuds MTA sont disposés de manière à recevoir le flot RLE à la fois sous de forme de relais et de convertisseur d'adresse et de manière à acheminer le flot RLE basé sur un algorithme distance-vecteur, dans lequel chaque noeud MTA contient un tableau des distances, qui décrit la distance à un noeud sur deux, et est disposé de manière à combiner ledit tableau des distances et un tableau de routage, et lesdits noeuds MTA sont disposés de manière à établir des parcours alternatifs entre des paires de noeuds pour l'élimination d'arrêt momentané dans les réseaux.

2. Système de gestion des services de transmission de données sur un réseau MTA selon la revendication 1, **caractérisé en ce qu'**il comprend des moyens pour relier des adresses du RLE à des adresses E. 164.

3. Système de gestion des services de transmission de données sur un réseau MTA selon l'une quelconque des revendications précédentes, **caractérisé en ce que** la fonction d'émulation RLE est disposée de manière à émuler la syntaxe et la sémantique des services MTA d'une interface RLE.

4. Système de gestion des services de transmission de données sur un réseau MTA selon l'une quelconque des revendications précédentes, **caractérisé en ce que** la fonction d'émulation RLE est disposée de manière à maintenir l'ordre de livraison des paquets entre deux noeuds MTA directement connectés, de manière à gérer les adresses de groupe et individuelles en supposant que les paquets qui sont adressés à un noeud RLE particulier ne peuvent pas toujours être transmis à un groupe de noeuds RLE et de manière à permettre qu'une station soit enregistrée dans un certain nombre de RLE virtuels au même moment.
